(19) Europäisches Patentamt / European Patent Office / Office européen des brevets

(11) EP 2 518 545 A1

(12) DEMANDE DE BREVET EUROPEEN

(43) Date de publication:
31.10.2012 Bulletin 2012/44

(51) Int Cl.:
*G02B 6/02* (2006.01)   *G02B 6/42* (2006.01)
*G02B 27/46* (2006.01)

(21) Numéro de dépôt: 12165543.5

(22) Date de dépôt: 25.04.2012

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME

(30) Priorité: 26.04.2011 FR 1153558

(71) Demandeur: Meggitt (France)
75011 Paris (FR)

(72) Inventeurs:
• Gaborel, Gaël
16170 PLAIZAC (FR)

• Auguste, Jean-Louis
87000 LIMOGES (FR)
• Humbert, Georges
87570 RILHAC RANCON (FR)
• Gérôme, Frédéric
87000 LIMOGES (FR)
• Blondy, Jean-Marc
87100 LIMOGES (FR)
• Beaudou, Benoit
87000 LIMOGES (FR)

(74) Mandataire: Jacobson, Claude
Cabinet Lavoix
2, Place d'Estienne d'Orves
75441 Paris Cedex 09 (FR)

(54) **Dispositif de transmission d'énergie lumineuse et procédé de transmission associé**

(57) Ce dispositif comporte une fibre optique (12) à coeur creux et un ensemble (14) d'illumination de la fibre optique (12) propre à illuminer la fibre optique (12) à une extrémité amont (16).

La fibre (12) comporte une gaine annulaire (22) anti-résonante disposée autour du coeur creux (20). L'ensemble d'illumination (14) comporte des moyens de génération d'un faisceau focalisé en forme de tache d'Airy destiné à être injecté à l'entrée de la fibre optique (12).

FIG.1

EP 2 518 545 A1

**Description**

La présente invention concerne un dispositif de transmission d'énergie lumineuse, du type comprenant :

- une fibre optique à coeur creux ;
- un ensemble d'illumination de la fibre optique propre à illuminer la fibre optique à une extrémité amont.

Un tel dispositif est destiné à être utilisé par exemple dans le micro-usinage, dans la spectroscopie, dans l'allumage laser de moteurs et de turbines ou encore dans d'autres applications nécessitant la génération et le transport d'un faisceau lumineux de haute énergie.

Dans tous ces domaines, il est parfois nécessaire de transmettre à travers une fibre optique des impulsions brèves, par exemple de durée inférieure à 100 nanosecondes, présentant une énergie élevée, par exemple de l'ordre du microjoule ou du millijoule.

Pour ce faire, il est connu d'utiliser des fibres optiques multimodes en silice.

Dans ce cadre, et pour éviter de détériorer la fibre, il est nécessaire de limiter l'énergie transmise en tenant compte de la densité de puissance maximale acceptable dans le coeur de la fibre.

Au-delà du seuil de dommage de la silice, la fibre optique subit des dégradations irréversibles, le plus souvent quelques centimètres après le couplage avec l'ensemble d'illumination.

Pour réduire la densité de puissance, la taille du coeur peut être augmentée. Cependant, une telle solution ne donne pas satisfaction, puisque la qualité spatiale du faisceau se dégrade, notamment en raison de l'augmentation du nombre de modes guidés.

Pour pallier au moins partiellement à ce problème, il est connu d'utiliser des fibres optiques à coeur creux. En particulier, il est possible de recouvrir l'intérieur d'un capillaire en verre de quelques centaines de micromètres de diamètre avec des couches diélectriques agissant comme un réflecteur pour piéger l'énergie lumineuse au sein du coeur d'air. Cependant, ces fibres optiques ont un coeur de grande dimension qui supporte de nombreux modes, ce qui dégrade la qualité spatiale du faisceau en sortie de fibre. En outre, la fabrication de ces fibres est difficile et les longueurs disponibles sont inférieures à quelques mètres.

Une solution partielle à ce problème est décrite par exemple dans US 7 099 533. Dans le dispositif exposé dans ce document, une fibre optique à coeur creux et à bande interdite photonique (Hollow-Core Photonic Band Gap ou HC-PBG) est utilisée. Les fibres optiques de ce type comportent une gaine interne microstructurée en silice entourant un coeur creux. La microstructure de la gaine présente des anneaux de tubes reliés ponctuellement entre eux par des points de liaison espacés suivant l'axe de la fibre. Ce type de gaine crée une bande interdite photonique autorisant la propagation d'un nombre très limité de modes dans le coeur d'air.

De telles fibres présentent des propriétés de transmission satisfaisantes, puisque leurs atténuations sont de l'ordre du dB par kilomètre. Cependant, leur fenêtre de transmission est relativement étroite et la longueur d'onde propagée se trouve directement liée à la périodicité des liaisons de la gaine microstructurée, ce qui a pour conséquence de limiter le diamètre du coeur d'air à quelques micromètres.

En outre, la taille du coeur de ces fibres est très limitée du fait des contraintes de la fabrication, ce qui diminue la transmission de puissance. Enfin, une partie de l'énergie du faisceau laser est propagée dans la microstructuration (la gaine interne), ce qui est susceptible de dégrader plus particulièrement les ponts de silice liant les tubes entre eux, provoquant la dégradation irréversible de la fibre.

Un but de l'invention est donc de fournir un dispositif de transmission de puissance lumineuse comportant un ensemble d'illumination et une fibre optique apte à transmettre des impulsions d'énergie élevée, notamment supérieure au millijoule, le dispositif étant très robuste.

A cet effet, l'invention a pour objet un dispositif du type précité, **caractérisé en ce que** la fibre comporte une gaine annulaire anti-résonante disposée autour du coeur creux, l'ensemble d'illumination comportant des moyens de génération d'un faisceau focalisé en forme de tache d'Airy destiné à être injecté à l'extrémité amont de la fibre optique.

Le dispositif selon l'invention peut comprendre une ou plusieurs des caractéristiques suivantes, prise(s) isolément ou suivant toutes combinaisons techniquement possibles :

- le faisceau focalisé en forme de tache d'Airy engendré par l'ensemble d'illumination présente un disque central de diamètre sensiblement égal à l'étendue transversale maximale du coeur creux de la fibre optique.
- l'ensemble d'illumination comporte une source laser et des moyens de couplage entre la source laser et la fibre optique, les moyens de couplage comportant au moins une lentille de couplage convergente présentant un foyer aval disposé au voisinage de l'extrémité amont de la fibre optique.
- l'ensemble d'illumination comporte un organe de filtrage spatial propre à empêcher le passage des anneaux secondaires du faisceau en forme de tache d'Airy.
- l'organe de filtrage spatial est disposé en regard de l'extrémité amont de la fibre optique.

- l'organe de filtrage spatial est disposé entre deux lentilles auxiliaires situées en amont l'extrémité amont.
- l'ensemble d'illumination comporte une source laser apte à engendrer un faisceau circulaire uniforme en champ proche.
- la source laser est choisie parmi une source laser comportant une cavité instable et un miroir à gradient de réflectivité ou une source laser comportant un système de modulation spatiale de faisceau.
- la gaine annulaire anti-résonante comporte au moins un anneau de tubes creux principaux adjacents, les tubes creux principaux délimitant entre eux des tubes intermédiaires de section inférieure à la section des tubes principaux adjacents.
- le coeur creux est limité par un tube central, avantageusement de forme polygonale.
- la dimension transversale maximale du coeur creux est supérieure à 5 micromètres, notamment supérieure à 20 micromètres, et est notamment comprise entre 50 micromètres et 500 micromètres.
- l'ensemble d'illumination est apte à émettre une pluralité d'impulsions lumineuses d'énergie supérieure à 1 millijoule.

L'invention a également pour objet un procédé de transmission d'énergie lumineuse, comprenant les étapes suivantes :

- fourniture d'un dispositif tel que défini plus haut ;
- activation de l'ensemble d'illumination pour engendrer un faisceau focalisé en forme de tache d'Airy ;
- illumination de l'extrémité amont de la fibre optique par le faisceau focalisé en forme de tache d'Airy ;
- transmission de l'énergie lumineuse injectée à travers la fibre optique jusqu'à une extrémité aval.

Le procédé selon l'invention peut comprendre l'une ou plusieurs des caractéristiques suivantes, prise(s) isolément ou suivant toutes combinaisons techniquement possibles :

- le dispositif comporte un organe de filtrage spatial, le procédé comportant le passage du disque central du faisceau en forme de tache d'Airy à travers l'organe de filtrage spatial, et le blocage des anneaux secondaires du faisceau focalisé en forme de tache d'Airy par l'organe de filtrage spatial.
- l'ensemble d'illumination produit un faisceau focalisé en forme de tache d'Airy formé d'impulsions lumineuses, l'énergie de chaque impulsion lumineuse transmise à travers la fibre optique étant supérieure à 1 millijoule.

L'invention sera mieux comprise à la lecture de la description qui va suivre, donnée uniquement à titre d'exemple, et faite en se référant aux dessins annexés, sur lesquels :

- la Figure 1 est une vue schématique d'un premier dispositif selon l'invention ;
- la Figure 2 est une vue, prise en coupe transversale, d'une fibre optique de type « kagomé » pouvant être utilisée dans le dispositif de la Figure 1 ;
- la Figure 3 est un graphe représentant le profil de mode transmis de la fibre du dispositif selon l'invention, en comparaison avec le profil de mode injecté de l'ensemble d'illumination selon l'invention, et en comparaison avec un profil gaussien ;
- la Figure 4 est une vue analogue à la Figure 1 d'un deuxième dispositif selon l'invention ;
- la Figure 5 est une vue du profil de faisceau en tache d'Airy engendré par l'ensemble d'illumination ; et
- la Figure 6 est une vue du profil d'énergie uniforme du faisceau laser engendré par la source présente dans l'ensemble d'illumination, avant son passage dans une lentille de couplage.

Dans tout ce qui suit, les termes « amont » et « aval » s'entendent par rapport au sens normal de circulation d'un faisceau lumineux à travers le dispositif.

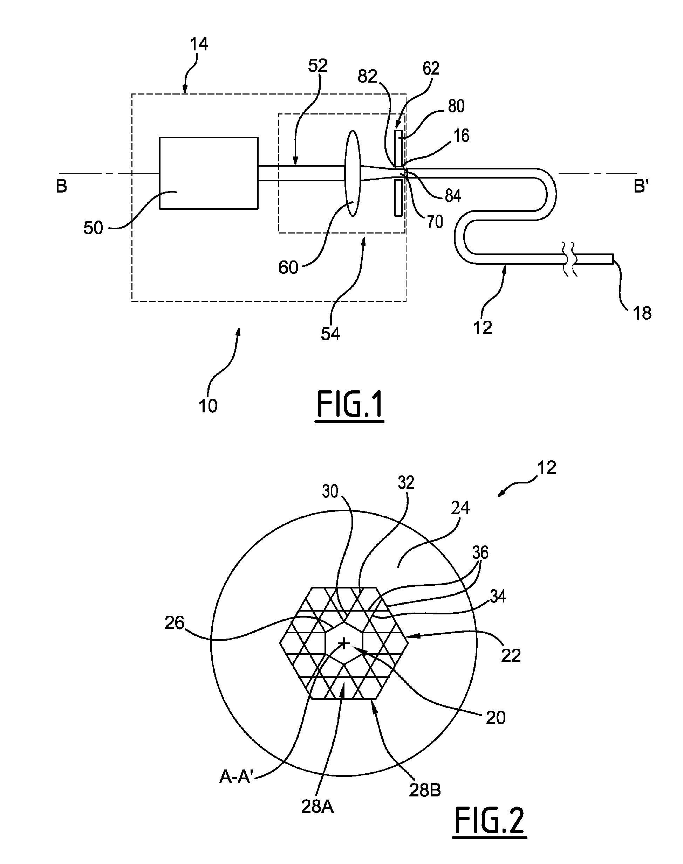

Un premier dispositif 10 de transmission d'énergie selon l'invention est illustré par les Figures 1 et 2.

Le dispositif 10 est destiné à engendrer et à transporter des impulsions lumineuses d'énergies élevées, par exemple d'énergie supérieure à 1 microjoule, notamment supérieure à 1 millijoule. Ces impulsions sont destinées à illuminer un échantillon pour réaliser de la spectroscopie, ou sont destinées à réaliser un micro-usinage d'une pièce. Ces impulsions sont également utilisables pour créer une étincelle destinée à allumer un mélange gazeux présent dans un moteur ou dans une turbine.

En référence à la Figure 1, le dispositif 10 comporte une fibre optique 12 à coeur creux et un ensemble 14 d'illumination d'une extrémité amont 16 de la fibre optique 12.

Selon l'invention, la fibre optique 12 à coeur creux forme un guide anti-résonant.

Un tel guide est capable de convoyer de la lumière par réflexion optique anti-résonante, définie par le terme anglais « anti-resonant reflecting optical wave guiding » ou « ARROW », en confinant le signal lumineux transmis de manière quasi-totale dans le coeur de la fibre 12.

Comme illustré par la Figure 1, la fibre 12 s'étend entre l'extrémité amont 16 et une extrémité aval 18 destinée à être placée en regard d'un objet à illuminer.

En référence à la Figure 2, la fibre 12 comporte un coeur creux 20, une gaine interne 22 anti-résonante disposée autour du coeur creux 20 et une gaine externe 24 pleine 24 disposée autour de la gaine interne 22.

La fibre 12 est par exemple du type « kagomé ».

La longueur de la fibre 12, prise entre son extrémité amont 16 et son extrémité aval 18 est par exemple supérieure à 2 centimètres, et peut s'étendre entre 1 m et 100 m.

Ceci est possible compte tenu des faibles pertes de ces fibres.

Le diamètre externe de la fibre 12 est généralement compris entre 100 micromètres et 1 mm.

Le coeur creux 20 s'étend axialement au centre de la fibre 12 sur toute la longueur de la fibre 12. Il débouche au niveau de l'extrémité amont 16 et de l'extrémité aval 18.

Dans cet exemple, le coeur 20 présente une section polygonale, avantageusement hexagonale ou formée d'un polygone présentant plus de six côtés.

Compte tenu de la nature de la gaine interne anti-résonante 22, qui sera décrite ci-dessous, la dimension transversale maximale du coeur 20 peut être relativement élevée. Cette dimension est par exemple supérieure à 5 micromètres notamment supérieure à 20 micromètres. Avantageusement, cette dimension est comprise entre 5 micromètres et 500 micromètres, notamment entre 20 micromètres et 200 micromètres.

Le coeur creux 20 définit une lumière totalement dégagée entre l'extrémité amont 16 et l'extrémité aval 18.

Comme illustré par la Figure 2, la gaine interne anti-résonante 22 comporte un tube interne 26 délimitant le coeur 20, et au moins un anneau périphérique 28A, 28B de tubes 30, 32 de sections polygonales, avantageusement de sections hexagonales ou pseudo-hexagonales.

Le tube interne 26 délimite extérieurement le coeur creux 20. Il présente une section de contour correspondant au contour du coeur 20.

Dans l'exemple représenté sur la Figure 2, cette section est polygonale, notamment hexagonale ou formée d'un polygone présentant plus de six côtés.

La gaine interne 22 présente au moins deux anneaux concentriques 28A, 28B de tubes 30, 32 disposés autour du tube central 26. Chaque tube 30, 32 s'étend continûment sur toute la longueur de la fibre 12, avec une section sensiblement constante.

Dans l'exemple représenté sur la Figure 2, l'anneau intérieur 28A comporte une pluralité de tubes principaux 30, 32 de section polygonale répartis autour de l'axe A-A' de la fibre 12. Dans cet exemple, les tubes 30 de l'anneau intérieur 28A sont de sections pseudo-hexagonales, compte tenu de la présence du tube central 26 avec lequel ils partagent des parois. Les tubes 32 de l'anneau extérieur sont de sections hexagonales.

La dimension transversale maximale des tubes 30, 32 est inférieure à la dimension transversale maximale du tube central 26.

Avantageusement, la dimension transversale maximale de chaque tube 30, 32 est inférieure à 1 fois l'étendue transversale maximale du coeur 20.

Chaque tube principal 30, 32 est adjacent à une pluralité d'autres tubes 30, 32 suivant une arête longitudinale commune 34 qui s'étend sur toute la longueur de la fibre 12. Ainsi chaque tube 30, 32 est raccordé à au moins un autre tube 30, 32 suivant une génératrice sur toute la longueur de la fibre 12.

Les tubes principaux 30, 32 délimitent entre leurs arêtes 34 communes une pluralité de tubes intermédiaires 36 de section transversale inférieure, avantageusement triangulaire. Les tubes intermédiaires 36 présentent des dimensions transversales maximales inférieures à celles des tubes principaux 30, 32. Les tubes intermédiaires 36 présentent aussi une lumière interne totalement dégagée sur toute la longueur de la fibre 12.

Ainsi, chaque tube 30 principal de section pseudo-hexagonale ou chaque tube principal 32 de section hexagonale est entouré par une pluralité de tubes auxiliaires 36 de section triangulaire, définissant une maille générale en forme d'étoile de David. Une telle structure de gaine interne creuse 22 est connue sous le nom de structure « kagomé ».

La gaine 22, et en particulier les parois définissant les tubes 30, 32, 36, 26 sont par exemple réalisées en silice. Ces parois présentent une épaisseur maximale inférieure à 10 micromètres.

L'épaisseur maximale de la gaine interne 22, prise entre le tube central 26 et la gaine externe 24 est par exemple supérieure à 10 micromètres et comprise entre 5 micromètres et 500 micromètres. La gaine 22 assure un guidage anti-résonant d'un faisceau lumineux passant à travers le coeur 20.

Par « gaine anti-résonante », on entend que moins de 0,1% de l'énergie lumineuse dans la fibre 12 introduite circule dans la gaine interne 22, l'énergie lumineuse étant sensiblement totalement confinée dans le coeur 20. Le caractère anti-résonant de la gaine 22, et en particulier la quantité d'énergie circulant dans la gaine 22, peut être mesurée par exemple par la méthode expérimentale divulguée dans l'article « Large-pitch kagome-structured hollow-core photonic crystal fiber » ; Optics Letters 31, 3574-3576 (2006).

La mesure est effectuée avantageusement à la longueur d'onde du faisceau émis par l'ensemble d'illumination 14, par exemple 1064 nm. En se déplaçant radialement par rapport à l'axe A-A' de la fibre 12, l'énergie présente en tout point de la gaine 22 est inférieure à 0.1 % de l'énergie présente au centre du coeur 20, compte tenu du caractère anti-résonant de la gaine 22.

Comme précisé plus haut, la gaine externe 24 est pleine. Elle est par exemple réalisée à base de silice. L'épaisseur maximale de la gaine externe 24 est par exemple supérieure à 20 micromètres et est notamment comprise entre 5 micromètres et 500 micromètres

La fibre 12 est apte à guider un faisceau lumineux sur de larges bandes spectrales, par exemple supérieures à plusieurs centaines de THz allant de l'ultra-violet (de l'ordre de 200 nm) au moyen infrarouge (de l'ordre de 3000 nm) avec des pertes relativement faibles. Ainsi, les pertes à travers la fibre 12 sont inférieures à 200 dB par kilomètre, notamment de l'ordre de 100 dB par kilomètre.

Compte tenu du guidage anti-résonant, la fibre 12 présente un fort confinement du signal lumineux dans le coeur 20, et un très faible recouvrement du signal lumineux avec les anneaux 28A, 28B.

Par « faible recouvrement » on entend que l'énergie transmise à travers les anneaux 28A, 28B de la gaine externe 24 est inférieure à 0,1% de l'énergie totale injectée dans la fibre 12, notamment à une longueur d'onde de 1064 nanomètres.

L'ensemble d'illumination 14 de la fibre 12 est propre à engendrer un faisceau en forme de tache d'Airy. Il comporte, en référence à la Figure 1, une source laser 50 apte à produire un faisceau circulaire uniforme 52 et des moyens de couplage 54 entre la source laser 50 et l'extrémité amont 16 de la fibre 12.

La source laser 50 comporte au moins une cavité laser (non représentée).

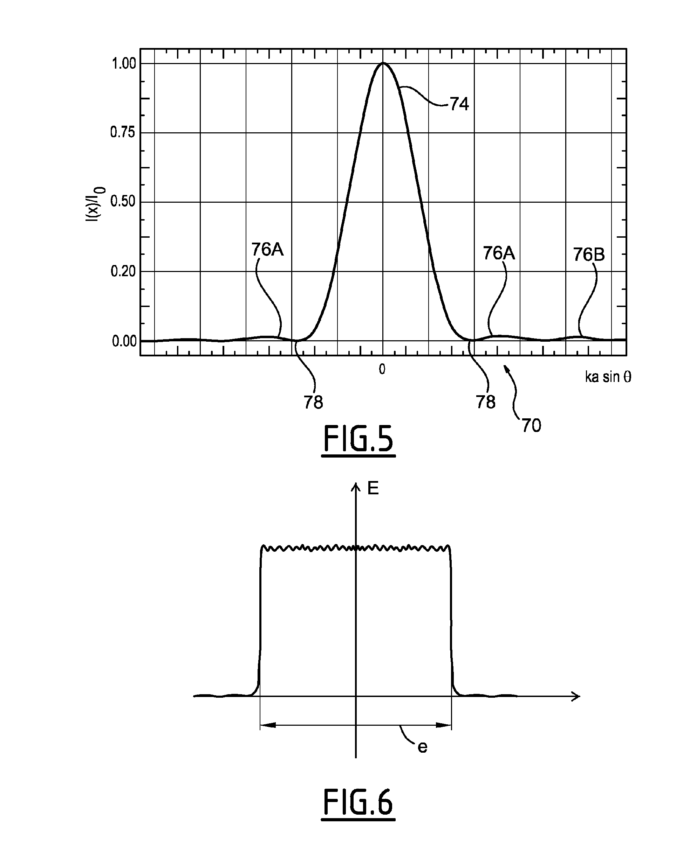

Le faisceau lumineux émis par la source 50 est avantageusement un faisceau laser de section circulaire. Comme illustré par la Figure 6, il présente, en champ proche, un profil de densité d'énergie E uniforme sur son étendue radiale e.

Par « faisceau circulaire uniforme », on entend que le faisceau présente une densité d'énergie sensiblement uniforme dans un disque circulaire.

Par « sensiblement uniforme », on entend que la variation maximale de densité d'énergie au sein du disque circulaire est inférieure à 30%.

Un tel faisceau est par exemple désigné par le terme « faisceau plat » (suivant l'expression anglaise « flat beam ») ou par le terme « faisceau en forme de haut de forme » (suivant l'expression anglaise « top hat beam »).

Par « champ proche », on entend à une distance inférieure à ou du même ordre de grandeur que la distance de Rayleigh Zr calculée par l'équation $Z_R = \dfrac{\pi w_0^2}{\lambda}$, où wo est le diamètre du faisceau et À est la longueur d'onde de la source.

Si le diamètre du faisceau laser est de l'ordre du millimètre, la longueur d'onde est de 1 $\mu$m, la distance de Rayleigh Zr est de l'ordre de 3 mètres environ, où wo est le diamètre du faisceau et $\lambda$, est la longueur d'onde de la source.

Pour réaliser un tel faisceau 52, la source laser 50 comporte par exemple une cavité laser instable associée à un miroir de sortie à gradient de réflectivité, désignée par l'acronyme anglais GRM.

Une source 50 de ce type est par exemple un laser de type Nd : YAG émettant à une longueur d'onde de l'ordre de 1064 nanomètres. Une source de ce type est commercialisée par la Société QUANTEL sous la désignation QUANTEL ULTRA avec cavité GRM.

En variante, la source laser 50 comporte une cavité laser stable, produisant par exemple un faisceau de sortie de profil gaussien. La source laser 50 comprend alors un dispositif de modelage de faisceau (désigné par le terme anglais « beam shaping ») afin d'obtenir un faisceau uniforme 52 tel que défini plus haut.

Ainsi, la source laser 50 est propre à engendrer un faisceau 52 formé avantageusement d'impulsions lumineuses de durée comprise entre 100 fs et 100 ns, notamment entre 1 ns et 20 ns.

L'énergie lumineuse des impulsions est par exemple comprise entre 0 et 50 millijoules, notamment et supérieure à 1 microjoule, avantageusement supérieure à 1 millijoule. A ce titre, un atténuateur variable est avantageusement interposé en aval de la cavité laser pour régler l'énergie de chaque impulsion.

Le faisceau 52 présente une longueur d'onde comprise entre 300 nm et 2000 nm, notamment entre 500 nm et 1100 nm, par exemple 532 nm ou 1064 nm.

Les moyens de couplage 54 comportent une lentille de couplage 60 propre à engendrer, à partir du faisceau uniforme 52, un faisceau 70 en forme de tache d'Airy au niveau de l'entrée amont 16 de la fibre 12, et un organe de filtrage spatial 62 du faisceau 70 en forme de tache d'Airy.

La lentille de couplage 60 est une lentille convergente. Elle présente une distance focale adaptée pour faire correspondre la tache d'Airy formée au foyer de la lentille de couplage, au mode de propagation de la fibre 12.

Comme illustré sur la Figure 5, le faisceau 70 présente un profil transversal de tache d'Airy qui suit une fonction de Bessel du premier ordre suivant l'équation ci-dessous :

$$I(\theta) = I_0 \left(\frac{2J_1(ka\sin\theta)}{ka\sin\theta}\right)^2 = I_0 \left(\frac{2J_1(x)}{x}\right)^2$$

dans laquelle Io est l'intensité maximale au centre de la tache, J1 est La tache d'Airy présente un disque central 74 et une pluralité d'anneaux secondaires 76A, 76B, avec deux minima 78 de valeur sensiblement nulle entre le disque central 74 et le premier anneau 76A secondaire.

L'extrémité amont 16 de la fibre 12 est positionnée dans l'axe B-B' de la lentille de couplage 60, au voisinage du foyer aval de la lentille 60. La distance focale de la lentille 60 est ajustée pour que l'étendue transversale du disque central 74 de la tache d'Airy 70, pris entre ses minima 78 soit sensiblement égale à l'étendue transversale moyenne du coeur 20.

Ainsi, l'ouverture numérique du faisceau 70 focalisé à l'extrémité amont 16 de la fibre 12 est sensiblement égale à l'ouverture numérique de la fibre 12.

Dans cet exemple, l'organe de filtrage spatial 62 comporte un corps opaque 80 au rayonnement lumineux engendré par la source laser 50, et une ouverture centrale 82 transparente au rayonnement lumineux engendré par la source laser 50.

Les dimensions de l'ouverture centrale 82 sont choisies pour permettre le passage du disque central 74 du faisceau 70 en forme de tache d'Airy et pour bloquer les anneaux 76A, 76B secondaires.

Ainsi, dans l'exemple représenté sur la Figure 1, l'organe de filtrage spatial 62 est avantageusement disposé au niveau de l'extrémité amont 16 de la fibre 12, perpendiculairement à l'axe B-B' de la lentille 60.

Dans ce cas, l'étendue transversale de l'ouverture centrale 82 visible sur la Figure 1 est sensiblement égale à la distance séparant les minima 78 du disque central 74 de la tache d'Airy 70 visibles sur la Figure 5.

Le faisceau de sortie focalisé 84 ainsi obtenu en aval de l'organe de filtrage présente donc une forme de tache d'Airy comportant exclusivement le disque central 74, ce qui limite encore la propagation d'énergie à travers la gaine interne 22 de la fibre.

L'énergie lumineuse transmise dans la fibre 12 est donc sensiblement exclusivement injectée dans le coeur creux 20. Ceci maximise l'énergie transmise à travers la fibre 12 en réduisant le risque de détérioration de la gaine interne 22 de la fibre 12 ou même de claquage.

En effet, l'ensemble d'illumination 10 engendrant un faisceau focalisé en forme de tache d'Airy, des minima 78 d'énergie sensiblement nulle sont présents autour du disque central 74.

La combinaison d'un ensemble d'illumination 14 produisant un faisceau focalisé en forme de tache d'Airy avec une fibre optique 12 présentant une gaine interne anti-résonante diminue considérablement l'énergie transmise à travers la gaine 22 de la fibre 12 tout en adaptant parfaitement le mode injecté dans la fibre 12 au mode de propagation de la fibre 12.

Le recouvrement du mode propagé avec les tubes 30, 32 de la gaine interne 22 est donc très limité et le profil du faisceau incident en entrée de fibre est parfaitement adapté au profil du mode transmis par la fibre 12.

Il est ainsi possible de propager un faisceau quasiment exclusivement dans le coeur 20 rempli de gaz, ce qui augmente significativement le seuil de dommage de la fibre 12, notamment par rapport à une fibre à coeur solide silice ou par rapport à une fibre à coeur creux présentant une bande photonique interdite, telle que décrite dans US 7,099,533.

Dans un mode de réalisation particulier, lorsque le diamètre de mode de la fibre est de 60 micromètres, le diamètre de sortie du faisceau laser engendré par la source 60 est de 2,8 millimètres, la distance focale calculée de la lentille de couplage 60 est de 69 millimètres.

Pour permettre une tolérance sur le positionnement du faisceau à l'entrée de la fibre 12, une lentille 60 de distance focale légèrement plus faible, par exemple de l'ordre de 56 millimètres peut être utilisée, ce qui engendre une ouverture numérique légèrement supérieure à l'ouverture numérique de la fibre.

La fibre 12, associée à l'ensemble d'illumination 14, est capable de supporter des impulsions de durée de l'ordre de la nanoseconde avec une énergie supérieure à 1 millijoule, notamment de l'ordre de 4 millijoules. Ceci représente une amélioration d'un facteur 6 par rapport à des fibres connues de l'état de la technique.

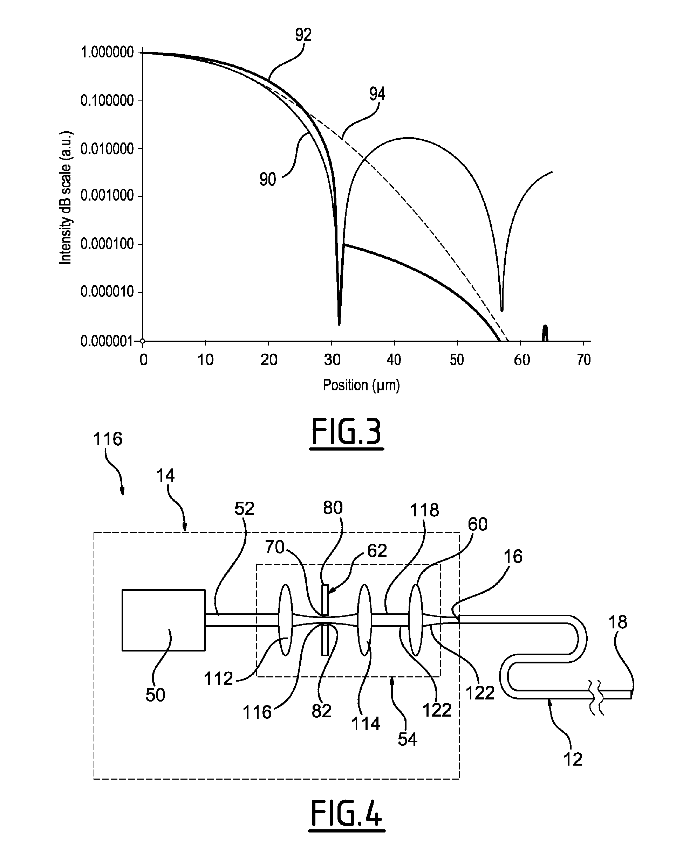

Comme illustré par la Figure 3, le profil 90 du faisceau injecté dans la fibre 12, représenté en traits continus fins est adapté au profil 92 du mode de propagation dans la fibre 12, ce qui n'est pas le cas d'un profil gaussien 94 représenté en pointillés sur cette même figure.

Le fonctionnement du dispositif de transmission 10 selon l'invention est le suivant.

Initialement, la source laser 50 engendre un faisceau circulaire uniforme 52, tel que décrit ci-dessus, ci-dessous.

Ce faisceau 52 est par exemple constitué d'impulsions lumineuses de longueur d'onde comprise entre 500 nanomètres et 1100 nanomètres et d'énergie supérieure à un microjoule avantageusement supérieure à 1 millijoule.

Les impulsions lumineuses présentent une durée comprise entre 100 fs et 100 ns.

Le faisceau 52 est ensuite dirigé vers la lentille de couplage 60 suivant l'axe B-B' de celle-ci. La lentille 60 fait converger le faisceau 52 pour former un faisceau de couplage 70 en forme de tache d'Airy au niveau du foyer aval de la lentille 60 de couplage.

Ce faisceau est filtre spatialement par l'organe de filtrage 62 qui laisse passer exclusivement le disque central 74 à travers l'ouverture centrale 82 en bloquant les anneaux secondaires 76A, 76B.

Le faisceau 84 de sortie focalisé obtenu en aval de l'organe de filtrage 62 est ensuite injecté dans la fibre 12. Ce faisceau comporte exclusivement le disque central 74 de la tache d'Airy 70. Il est injecté dans le coeur creux 20 de la fibre 12. Compte tenu du caractère anti-résonant de la gaine interne 22, le faisceau injecté se propage à travers la fibre 12 entre l'extrémité amont 16 et l'extrémité aval 18, en étant sensiblement totalement confiné dans le coeur 20. Il sort de la fibre 18 à son extrémité aval, pour être utilisé dans les applications décrites plus haut.

Un deuxième dispositif 110 selon l'invention est illustré par la Figure 4. A la différence du dispositif 10 représenté sur la Figure 3, les moyens de couplage 54 du dispositif 110 comportent une lentille auxiliaire amont 112, et une lentille auxiliaire aval 114 disposées en amont de la lentille de couplage 60. Les lentilles 112, 114 forment un système de télescope.

Dans cet exemple, l'organe de filtrage 62 est disposé entre les lentilles 112, 114, au niveau du foyer aval de la lentille auxiliaire amont 112.

La lentille auxiliaire amont 112 est donc apte à focaliser le faisceau uniforme 52 issu de la source laser 50 au niveau de son foyer 116 aval, pour permettre la formation d'un faisceau 70 en forme de tache d'Airy.

Ensuite, l'organe de filtrage 62 filtre les anneaux secondaires 76A, 76B du faisceau en forme de tache d'Airy 70 ainsi formé pour ne laisser passer que le disque central 74.

Le faisceau de sortie 118 ainsi obtenu est alors collimaté par la lentille aval 114 pour obtenir un faisceau uniforme aval 120.

Avantageusement, la lentille amont 112 et la lentille aval 114 sont de distances focales identiques, de sorte que le grandissement à travers les lentilles 112, 114 est unitaire.

Puis, le faisceau uniforme aval 120 est dirigé vers la lentille de couplage 60 suivant son axe pour permettre d'injecter un faisceau focalisé en forme de disque central de tache d'Airy comprenant au niveau de l'entrée amont 16 de la fibre 12.

Dans une variante avantageuse, les lentilles 112, 114 présentent une distance focale plus importante que la distance focale de la lentille de couplage 60. Ainsi, le diamètre du disque central 74 de la tache d'Airy 70 formée au foyer aval 116 de la première lentille 112 présente une étendue transversale supérieure au disque central du faisceau injecté dans la fibre 12.

L'organe de filtrage 62 présente un diamètre augmenté, et l'ouverture 82 peut être de dimension supérieure, ce qui diminue la densité de puissance s'appliquant sur le corps opaque 80 au niveau des anneaux secondaires 76A, 76B du faisceau 70 en forme de tache d'Airy.

Dans une variante (non représentée), la gaine anti-résonante 22 de la fibre 12 comporte un tube central de section polygonale, notamment hexagonale, délimitant extérieurement le coeur creux 20 et un seul anneau 28A de tubes principaux adjacents délimités en partie par le tube central, et en partie par la gaine externe 24. Une telle fibre est par exemple représentée sur la Figure 1 de l'article « Simplified Hollow-Core photonic crystal fiber » Optics Lettres, 35, 1157-1159 (2010).

D'autres variantes de gaines anti-résonantes 20 peuvent être conçues par l'homme du métier.

**Revendications**

1. Dispositif (10 ; 110) de transmission d'énergie laser, du type comprenant :

   - une fibre optique (12) à coeur creux ;
   - un ensemble (14) d'illumination de la fibre optique (12) propre à illuminer la fibre optique (12) à une extrémité amont (16) ;
   **caractérisé en ce que** la fibre (12) comporte une gaine annulaire (22) anti-résonante disposée autour du coeur creux (20), l'ensemble d'illumination (14) comportant des moyens de génération d'un faisceau focalisé en forme de tache d'Airy destiné à être injecté à l'extrémité amont (16) de la fibre optique (12).

2. Dispositif (10 ; 110) selon la revendication 1, **caractérisé en ce que** le faisceau focalisé en forme de tache d'Airy engendré par l'ensemble d'illumination (14) présente un disque central (74) de diamètre sensiblement égal à l'étendue transversale maximale du coeur creux (20) de la fibre optique (12).

3. Dispositif (10 ; 110) selon l'une des revendications 1 ou 2, **caractérisé en ce que** l'ensemble d'illumination (14) comporte une source laser (50) et des moyens (54) de couplage entre la source laser (50) et la fibre optique (12), les moyens de couplage (54) comportant au moins une lentille de couplage (60) convergente présentant un foyer aval disposé au voisinage de l'extrémité amont (16) de la fibre optique (12).

4.  Dispositif (10 ; 110) selon l'une quelconque des revendications précédentes, **caractérisé en ce que** l'ensemble d'illumination (14) comporte un organe de filtrage spatial (62) propre à empêcher le passage des anneaux secondaires (74A, 74B) du faisceau en forme de tache d'Airy.

5.  Dispositif (10) selon la revendication 4, **caractérisé en ce que** l'organe de filtrage spatial (62) est disposé en regard de l'extrémité amont (16) de la fibre optique (12).

6.  Dispositif (110) selon la revendication 4, **caractérisé en ce que** le l'organe de filtrage spatial (62) est disposé entre deux lentilles auxiliaires (112 ; 114) situées en amont l'extrémité amont (16).

7.  Dispositif (10 ; 110) selon l'une quelconque des revendications précédentes, **caractérisé en ce que** l'ensemble d'illumination (14) comporte une source laser apte à engendrer un faisceau circulaire uniforme (52) en champ proche.

8.  Dispositif (10 ; 110) selon la revendication 7, **caractérisé en ce que** la source laser (50) est choisie parmi une source laser comportant une cavité instable et un miroir à gradient de réflectivité ou une source laser comportant un système de modulation spatiale de faisceau.

9.  Dispositif (10 ; 110) selon l'une quelconque des revendications précédentes, **caractérisé en ce que** le gaine annulaire (22) anti-résonante comporte au moins un anneau (28A, 28B) de tubes creux principaux (30, 32) adjacents, les tubes creux principaux (30, 32) délimitant entre eux des tubes intermédiaires (36) de section inférieure à la section des tubes principaux adjacents.

10.  Dispositif (10 ; 110) l'une quelconque des revendications précédentes, **caractérisé en ce que** le coeur creux (20) est limité par un tube central (26), avantageusement de forme polygonale.

11.  Dispositif (10 ; 110) selon l'une quelconque des revendications précédentes, **caractérisé en ce que** la dimension transversale maximale du coeur creux (20) est supérieure à 5 micromètres, notamment supérieure à 20 micromètres, et est notamment comprise entre 50 micromètres et 500 micromètres.

12.  Dispositif (10 ; 110) selon l'une quelconque des revendications précédentes, **caractérisé en ce que** l'ensemble d'illumination (14) est apte à émettre une pluralité d'impulsions lumineuses d'énergie supérieure à 1 millijoule.

13.  Procédé de transmission d'énergie lumineuse, comprenant les étapes suivantes :

     - fourniture d'un dispositif (10 ; 110) selon l'une quelconque des revendications précédentes ;
     - activation de l'ensemble d'illumination (14) pour engendrer un faisceau focalisé en forme de tache d'Airy ;
     - illumination de l'extrémité amont (16) de la fibre optique (12) par le faisceau focalisé en forme de tache d'Airy ;
     - transmission de l'énergie lumineuse injectée à travers la fibre optique (12) jusqu'à une extrémité aval (18).

14.  Procédé selon la revendication 13, **caractérisé en ce que** le dispositif comporte un organe de filtrage spatial (72), le procédé comportant le passage du disque central du faisceau en forme de tache d'Airy à travers l'organe de filtrage spatial (72), et le blocage des anneaux secondaires (76A, 76B) du faisceau focalisé en forme de tache d'Airy par l'organe de filtrage spatial (72).

15.  Procédé selon l'une quelconque des revendications 13 ou 14, **caractérisé en ce que** l'ensemble d'illumination (14) produit un faisceau focalisé en forme de tache d'Airy formé d'impulsions lumineuses, l'énergie de chaque impulsion lumineuse transmise à travers la fibre optique (12) étant supérieure à 1 millijoule.

## FIG.1

## FIG.2

## FIG.3

## FIG.4

**FIG.5**

**FIG.6**

Europäisches
Patentamt

European
Patent Office

Office européen
des brevets

**RAPPORT DE RECHERCHE EUROPEENNE**

Numéro de la demande

EP 12 16 5543

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 4 842 360 A (CARO RICHARD G [US] ET AL) 27 juin 1989 (1989-06-27) * ligne 10 - colonne 4; figure 1 * ----- | 1-15 | INV. G02B6/02 G02B6/42 G02B27/46 |
| Y | F. Gérôme, R. Jamier, J.-L. Auguste, G. Humbert, S. Rougier et J.-M. Blondy: "Conception et réalisation d'une fibre à coeur creux simplifiée", JNOG2010 , 22 octobre 2010 (2010-10-22), XP002668299, Extrait de l'Internet: URL:http://jnog.univ-fcomte.fr/cd1/data/articles/000062.pdf [extrait le 2012-01-30] * abrégé * ----- | 1-15 | |
| A | US 3 724 930 A (FARMER W) 3 avril 1973 (1973-04-03) * le document en entier * ----- | 1-15 | |
| A | US 7 847 213 B1 (ANIKITCHEV SERGUEI G [US]) 7 décembre 2010 (2010-12-07) * le document en entier * ----- | 1-15 | **DOMAINES TECHNIQUES RECHERCHES (IPC)** G02B |

Le présent rapport a été établi pour toutes les revendications

| Lieu de la recherche | Date d'achèvement de la recherche | Examinateur |
|---|---|---|
| La Haye | 18 mai 2012 | Plouzennec, Loïg |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 16 5543

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-05-2012

| Document brevet cité au rapport de recherche | Date de publication | Membre(s) de la famille de brevet(s) | Date de publication |
|---|---|---|---|
| US 4842360 A | 27-06-1989 | AUCUN | |
| US 3724930 A | 03-04-1973 | AUCUN | |
| US 7847213 B1 | 07-12-2010 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7099533 B

**Littérature non-brevet citée dans la description**

- Large-pitch kagome-structured hollow-core photonic crystal fiber. *Optics Letters,* 2006, vol. 31, 3574-3576

- Simplified Hollow-Core photonic crystal fiber. *Optics Lettres,* 2010, vol. 35, 1157-1159